# EUROPEAN PATENT APPLICATION

(11) **EP 4 456 269 A1**
(43) Date of publication of application: **30.10.2024**
(21) Application number: 24172797.3
(22) Date of filing: 26.04.2024
(51) Int. Cl.: H01M 50/105, G01B 11/255

(54) **METHOD AND APPARATUS FOR INSPECTING FOLDING PORTION OF POUCH TYPE SECONDARY BATTERY**

(30) Priority: 28.04.2023 KR 20230056479
(71) Applicant: SK On Co., Ltd., Seoul 03161 (KR)
(72) Inventor: CHEON, Seung Hyeon, 34124 Daejeon (KR); KIM, Sung Yeop, 34124 Daejeon (KR); JUNG, Jun Hee, 34124 Daejeon (KR); CHOI, Seung Won, 34124 Daejeon (KR)
(74) Representative: Stolmár & Partner Patentanwälte PartG mbB

(57) **Abstract**

As a method for inspecting a folding portion formed by folding an outer portion of the secondary battery case, the method including: acquiring an image of a target inspection portion, which is a portion of the folding portion in which measurement is performed; extracting N curve profiles including a folding vertex of the folding portion from an inside of the target inspection portion; and calculating a radius of curvature around the folding vertex from the N curve profiles.

## Description

### BACKGROUND

### 1. FIELD

The present disclosure relates to a method and apparatus for inspecting a folding portion of a pouch-type secondary battery.

### 2. DESCRIPTION OF RELATED ART

Recently, as mobile electronic devices have rapidly become smaller and lighter, demand for a secondary battery as an energy source is rapidly increasing. A secondary battery refers to a battery that can be repeatedly charged and discharged because mutual conversion between chemical energy and electrical energy is reversible.

Secondary batteries may be largely divided into a cylindrical battery, a prismatic battery, and a pouch-type battery, depending on an appearance thereof. Thereamong, the demand for a thin prismatic battery and pouch-type battery is increasing with due to the miniaturization trend of mobile electronic devices.

### SUMMARY

An aspect of the present disclosure is to provide a method and apparatus for inspecting a folding portion of a pouch-type secondary battery for determining whether a pouch-type secondary battery cell is defective.

For example, in the present disclosure, insulation breakdown or electrolyte leakage in a folded portion of the pouch-type secondary battery cell may be minimized.

According to an aspect of the present disclosure, as a method for inspecting a folding portion of a pouch-type secondary battery, formed by folding an outer portion of a secondary battery case, the method including: acquiring an image of a target inspection portion, a portion of the folding portion in which measurement is performed; extracting N curve profiles including a folding vertex of the folding portion from an inside of the target inspection portion; and calculating a radius of curvature around the folding vertex from the N curve profiles.

In this case, the operation of acquiring the image may include setting the target inspection portion.

In addition, the outer portion of the secondary battery case may include a sealing portion formed by being sealed, and the target inspection portion may include at least one of both ends of the sealing portion.

The sealing portion may include a first sealing portion formed in a longitudinal direction of the secondary battery case and including the folding portion; and a second sealing portion formed in a direction intersecting the first sealing portion, wherein the target inspection portion may include a portion in which the first sealing portion and the second sealing portion meet.

In addition, the target inspection portion may be 4.5 mm or more and less than 5.5 mm from an end of the secondary battery case in a longitudinal direction of the secondary battery case.

The operation of calculating the radius of curvature may include acquiring a plurality of n measurement points from respective curve profiles; obtaining a slope between two adjacent points of the plurality of n measurement points; and respectively obtaining coordinates of a first point P1 in which a measurement section of the radius of curvature starts and a second point P2 in which the measurement section of the radius of curvature ends.

In addition, the first point P1 and the second point P2 may be set by a size of a point determination section (a).

The radius of curvature may be calculated using points of the curve profiles between the first point P1 and the second point P2.

In addition, a verification operation of verifying appropriacy between the first point P1 and the second point P2 may be further included.

The verification operation verifies whether decision conditions are satisfied, and the decision conditions may be conditions using a straight line (m) approximating a section from a calculation start point (i₁) of the curve profiles to the first point P1, and using a straight line (n) approximating a section from the second point P2 to a calculation end point (iₙ) of the curve profiles.

In addition, when the decision conditions of the verification operation are not satisfied, an operation of resetting the size of the point determination section (a) may be further included.

A comparison decision operation of comparing the sizes of the N radii of curvature with a reference value (Rₒ) may be further included.

In addition, the operation of calculating the radius of curvature may include obtaining an average value (R_{avg}) of the N radii of curvature, and the comparison decision operation may include comparing the average value (R_{avg}) of the N radii of curvature with the reference value (Rₒ).

The operation of calculating the radius of curvature may include obtaining a median value (R_{medi}) of the N radii of curvature, and the comparison decision operation may include comparing the median value (R_{medi}) of the N radii of curvature with the reference value (Rₒ) .

According to an aspect of the present disclosure, an apparatus for inspecting a folding portion of a pouch-type secondary battery, may include: an image acquisitor for acquiring an image of a target inspection portion of a pouch-type secondary battery cell; a curve extractor for extracting N curve profiles including a folding portion, formed by folding an outer portion of the secondary battery cell and a folding vertex of the folding portion from an inside of the target inspection portion; and a calculator for calculating a radius of curvature around the folding vertex.

In this case, the calculator may extract points for obtaining the radius of curvature using a plurality of n measurement points and a slop of straight lines between two adjacent points of the plurality of n measurement points from the curve profiles.

In addition, the calculator may obtain an equation of a circle approximating the curve profiles using the extracted points for obtaining the radius of curvature, and calculate a radius of the equation of the circle to obtain the radius of curvature.

### BRIEF DESCRIPTION OF DRAWINGS

The above and other aspects, features and other advantages of the present disclosure will be more clearly understood from the following detailed description taken in conjunction with the accompanying drawings, in which:
FIG. 1 is a flowchart illustrating a method for inspecting a folding portion of a pouch-type secondary battery according to an embodiment of the present disclosure.
FIG. 2 is an enlarged view of a pouch-type secondary battery cell, which is to be inspected, an image acquisitor, and a target inspection portion, according to an embodiment of the present disclosure.
FIG. 3 is a front view of the pouch-type secondary battery cell which is to be inspected before being folded.
FIG. 4 is a side view of the pouch-type secondary battery cell which is to be inspected after being folded.
FIG. 5 is a flowchart illustrating a calculation method in an operation S3 of calculating a radius of curvature of respective curve profiles.
FIG. 6 is a graph illustrating curve profiles, which are to be calculated in FIG. 5, straight lines connecting two adjacent points of a plurality of n measurement points, and a slope of respective straight lines.
FIG. 7 is a flowchart further including an operation of verifying appropriacy in the calculation method of FIG. 5.
FIG. 8 illustrates the curve profiles of FIG. 6 and the straight lines m and n for calculating the appropriacy verification operation of FIG. 7.
FIG. 9 is a block diagram illustrating an apparatus for inspecting a folding portion of a pouch-type secondary battery 1 according to an embodiment of the present disclosure.

### DETAILED DESCRIPTION

Prior to the detailed description of the present disclosure, the terms or words used in the present specification and claims described below should not be construed as being limited to a common or dictionary meaning, and the inventor intends to use his/her invention in the best way. Based on the principle that terms may be properly defined for description, they should be interpreted as meanings and concepts consistent with the technical spirit of the present disclosure. Therefore, the embodiments described in this specification and the configurations shown in the drawings are only the most preferred embodiments of the present disclosure, and do not represent all of the technical spirit of the present disclosure, so it should be understood that there may be various equivalents and modifications that can be substituted therefor at the time of this application.

Hereinafter, preferred embodiments of the present disclosure will be described in detail with reference to the attached drawings. In this case, it should be noted that in the attached drawings, the same components are indicated by the same reference symbols whenever possible. In addition, detailed descriptions of functions and configurations known in the art that may obscure the gist of the present disclosure will be omitted. For the same reason, in the accompanying drawings, some components are exaggerated, omitted, or schematically shown, and the size of each component does not entirely reflect the actual size.

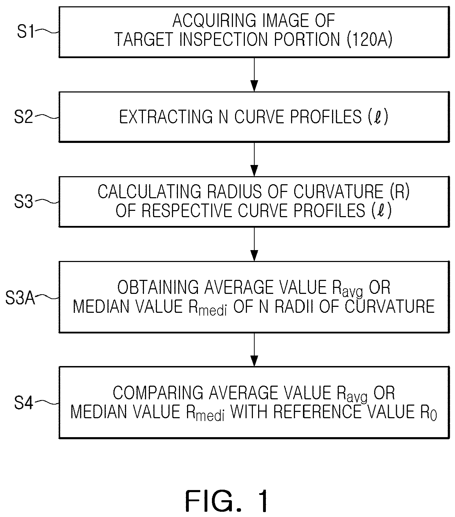

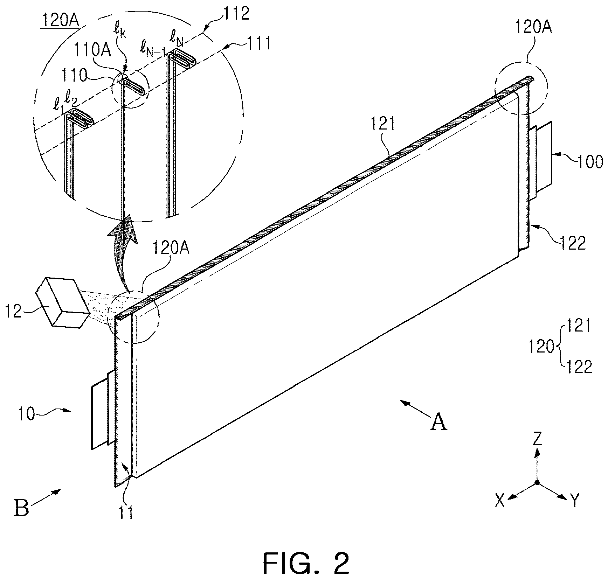

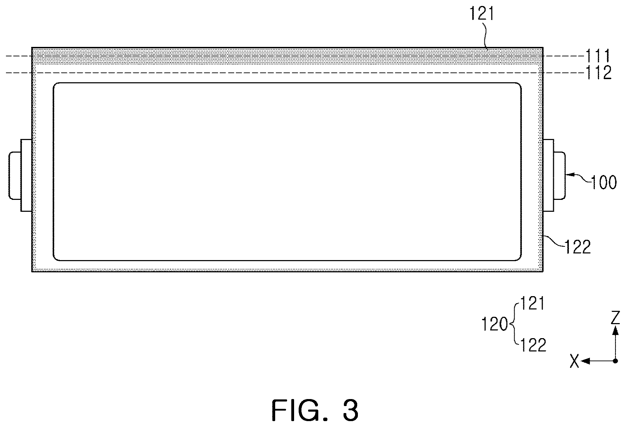

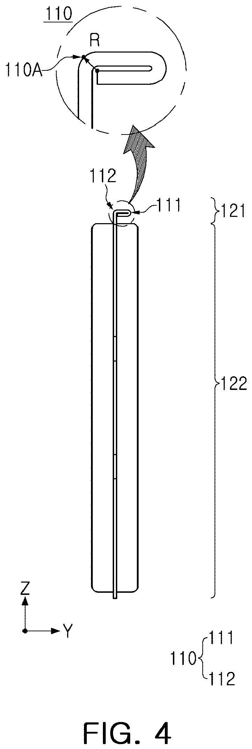

FIG. 1 is a flowchart illustrating a method for inspecting a folding portion of a pouch-type secondary battery according to an embodiment of the present disclosure. FIG. 2 is an enlarged view of a pouch-type secondary battery cell, which is to be inspected, an image acquisitor, and a target inspection portion according to an embodiment of the present disclosure. FIG. 3 is a front view of the pouch-type secondary battery cell, which is to be inspected before being folded. FIG. 4 is a side view of the pouch-type secondary battery cell, which is to be inspected to be inspected after being folded.

A method for inspecting a folding portion of a pouch-type secondary battery according to an embodiment of the present disclosure will be described with reference to FIGS. 1 to 4.

Referring to FIGS. 1 and 2, the method for inspecting a folding portion of a pouch-type secondary battery according to an embodiment of the present disclosure may include acquiring an image of a target inspection portion (120A) (S1), extracting N curve profiles (l₁, l₂, ... l_{N}) (S2), and obtaining a radius of curvature R of respective curve profiles (l₁, l₂, ... l_{N}) (S3) . In addition, the method for inspecting a folding portion of a pouch-type secondary battery may further include a comparison decision operation (S4) of calculating an average value (R_{avg}) or a median value (R_{medi}) of the N radii of curvature (S3A) and comparing the values with a reference value (Rₒ) .

According to an embodiment of the present disclosure, the operation S1 of acquiring an image of a target inspection portion 120A may include setting a target inspection portion 120A. The target inspection portion 120A is a portion in which measurement is performed among the secondary battery case 11 of the pouch-type secondary battery cell 10, which is to be inspected. Hereinafter, with reference to FIGS. 2 to 4, the target inspection portion 120A of the pouch-type secondary battery cell 10, which is to be inspected, will be described.

The pouch-type battery may include an electrode assembly and a pouch-type case 11 accommodating the electrode assembly. The pouch-type case 11 may accommodate the electrode assembly with an electrode tab withdrawn through one or both side surfaces, and may have a sealing portion 120 along an outer portion of the pouch-type case for sealing after electrolyte injection.

In this case, the sealing portion 120 may be formed to have a certain width or more to maintain a sealed state. However, due to the width of the sealing portion 120, a volume of the pouch-type secondary battery cell 10 may increase, thereby reducing battery density. Therefore, in a process for manufacturing a pouch-type battery, a folding process of folding a sealing portion (a sealing portion on a side surface of the pouch-type case from which an electrode tab is not withdrawn) to reduce the volume of cells of the pouch-type battery.

However, folding may cause insulation breakdown and electrolyte leakage of the sealing portion 120, and may cause cracks to occur in a polypropylene (PP) layer forming the pouch-type case 11, thereby causing insulation breakdown. In addition, folding, due to a difference in elongation between a polypropylene (PP) layer and an aluminum (Al) layer of forming the pouch-type case 11, may cause detachment between the two layers, causing electrolyte leakage through a gap.

In order to prevent insulation breakdown and electrolyte leakage which may occur due to folding, and at the same time, to reduce a volume of the battery due to folding, it may be important to optimize and set a radius of curvature of the folding portion.

Referring to FIG. 2, the pouch-type secondary battery cell 10 to be inspected includes a secondary battery case 11 and an electrode assembly (not shown). The secondary battery case 11 accommodates an electrode assembly (not shown), and an outer portion of the case 11 is sealed to form a sealing portion 120.

The sealing portion 120 may include a first sealing portion 121 formed in a longitudinal direction of the secondary battery case 11 and a second sealing portion 122 formed in a direction intersecting the first sealing portion 121. In this case, the electrode tab 100 may protrude to one side surface or both side surfaces of the secondary battery case 11 in which the second sealing portion 122 is formed.

Referring to FIGS. 2 to 4, the first sealing portion 121 may include a folding portion 110 which is formed by being folded. Hereinafter, a reference line of the folding portion 110, which is folded, will be defined and described as a folding line. As an example, the first sealing portion 121 may be folded approximately 180 degrees based on a first folding line 111 and folded approximately 90 degrees based on a second folding line 112 to form a folding portion 110 of FIG. 3. In FIG. 3, a folding portion 110 may be formed by folding the first sealing portion 121 twice, but the present disclosure is not limited thereto, and the number or order of being folded may be changed in various ways. In this case, a portion in which the secondary battery case 11 is folded by the second folding line 112 may be a portion forming a folding vertex 110A, to be described later.

The target inspection portion 120A may be set to include at least one of both ends of the first sealing portion 121. The target inspection portion 120A may be set to include a portion in which the first sealing portion 121 and the second sealing portion 122 meet. As an example, the target inspection portion 120A may be set to have a length of 4.5 mm or more and less than 5.5 mm from an end of the secondary battery case 11 in a longitudinal direction of the secondary battery case 11.

According to an embodiment of the present disclosure, after acquiring the image of the target inspection portion 120A, an operation (S2) of extracting N curve profiles (l₁, l₂, ... l_{N}) is performed within the target inspection portion 120A. Referring to FIG. 2, N curve profiles (l₁, l₂, ... l_{N}) may be extracted from the target inspection portion 120A. To extract the curve profile, the target inspection portion 120A may be divided into N parts, but the present disclosure is not limited thereto. The N curve profiles (l₁, l₂, ... l_{N}) may include a folding vertex 110A of the folding portion 110. A second fold line 112 of the folding portion 110 may coincide with a line connecting the N folding vertices 110A.

The folding vertex 110A may be a vertex of the folded portion most adjacent to the second sealing portion 122 in any one of the extracted curve profiles l_{K}. In an embodiment, the folding vertex 110A may be a point at which the curve profile l_{K} and the second folding line 112 intersect. A portion of the second folding line 112 within the target inspection portion 120A forming the folding vertex 110A may be affected by internal pressure of the secondary battery case 11, and more insulation breakdown or electrolyte leakage may occur than that of the first folding line 111. Accordingly, the point in which the curve profile (l_{K}) and the second folding line 112 intersect may be set as a folding vertex 110A, and a radius of curvature R around the folding vertex 110A may be calculated.

According to an embodiment of the present disclosure, after the operation (S2) of extracting N curve profiles (l₁, l₂, ... l_{N}) is performed from an inside of the target inspection portion 120A, an operation (S3) of obtaining a radius of curvature R is performed. A detailed description of the operation (S3) of obtaining the radius of curvature R will be described later. The operation (S3) of obtaining the radius of curvature R may include obtaining an average value (R_{avg}) or a median value (R_{medi}) of the N radii of curvature R, after calculating the N radii of curvature R (S3A).

According to an embodiment of the present disclosure, the method may include a comparison decision operation (S4) of comparing a size of the N radii of curvature R with a reference value (Rₒ) . The comparison decision operation (S4) may include an operation of comparing the average value (R_{avg}) of the N radii of curvature (R) or the median value (R_{medi}) of the N radii of curvature (R) with the reference value (Rₒ) .

By comparing the average value (R_{avg}) or the median value (R_{medi}) with the reference value (Rₒ), it is possible to easily determine whether the secondary battery cell 10 is defective. In addition, by identifying a size of an optimal radius of curvature that can be used when manufacturing the secondary battery cell 10, a folding process may be performed with the optimal radius of curvature. This can minimize insulation breakdown or electrolyte leakage in the folding portion of the pouch-type secondary battery cell.

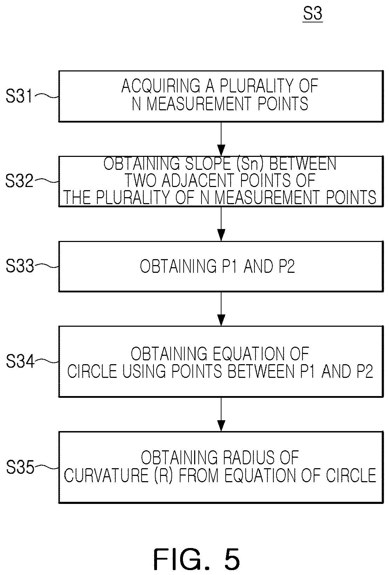

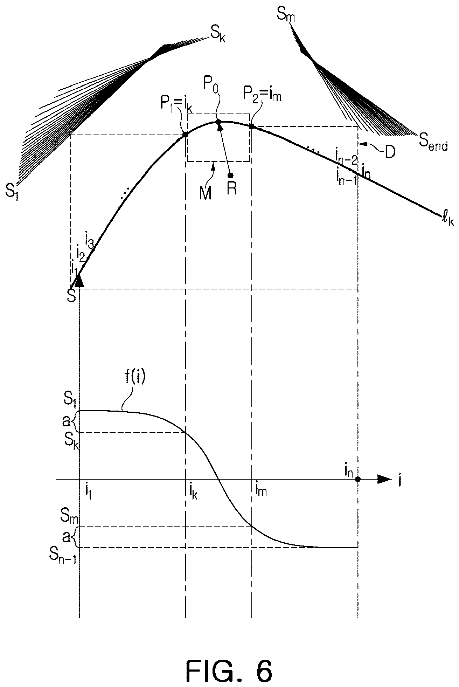

FIG. 5 is a flow chart illustrating a calculation method of the operation (S3) of obtaining a radius of curvature of respective curve profiles, and FIG. 6 illustrates a graph illustrating a curve profile, subject to being obtained in FIG. 5, straight lines connecting two adjacent points of a plurality of n measurement points, adjacent to each other and a slope of respective straight lines.

Hereinafter, with reference to FIGS. 5 and 6, in the N curve profiles (l₁, l₂, ... l_{N}), an operation (S3) of calculating a radius of curvature R around a folding vertex 110A of any one curve profile (l_{K}) according to an embodiment of the present disclosure will be described in detail.

Referring to FIG. 5, the operation (S3) of calculating the radius of curvature R of the folding vertex 110A may include an operation (S31) of acquiring a plurality of n measurement points from each curve profile (l_{K}), an operation (S32) of obtaining a slope (Sn) between two n adjacent measurement points, and an operation (S33) of respectively obtaining coordinates of a first point P1 in which a measurement section M of the radius of curvature R starts and a second point P2 in which the measurement section M of the radius of curvature R ends. Thereafter, the radius of curvature R may be calculated using points of the curve profile (l_{K}) between the first point P1 and the second point P2. That is, the method may include an operation (S34) of obtaining an equation of a circle using points between the first point P1 and the second point P2 and an operation of (S35) of obtaining a radius of curvature R from the equation of the circle.

FIG. 6 illustrates one curve profile (l_{K}) illustrating a graph illustrating a plurality of n measurement points (i₁, i₂, ... iₙ) acquired within a certain range D, straight lines illustrating a slope between two adjacent measurement points (top in FIG. 6), and slopes (S:S₁,S₂, ... Sₙ₋₁) between two adjacent measurement points as a Y-axis, and a plurality of n measurement points (i₁, i₂, ... iₙ) as an X-axis (bottom in FIG. 6).

Referring to FIG. 6, a plurality of n measurement points (i₁, i₂, ... iₙ) above a curve profile (l_{K}) may be obtained within a certain range D from one curve profile (l_{K}). The certain range D may be set based on a folding vertex (P₀) of the curve profile (l_{K}) . In a certain range in which a plurality of n measurement points (i₁, i₂, ... iₙ) are obtained, a plurality of curve profiles (l₁, l₂, ... l_{N}) are set to be the same.

Slopes (S:S₁,S₂, ... Sₙ₋₁) between two adjacent points of the n measurement points (i₁, i₂, ... iₙ) may be obtained using the acquired plurality of n measurement points (i₁, i₂, ... iₙ). In this case, n may be a natural number of 2 or more. For example, a slope of a straight line connecting i₁ and i₂ i₁ may be S₁, a slope of a straight line connecting i₂ and i₃ may be S₂, a slope of a straight line connecting iₙ₋₂ and iₙ₋₁ may be Sₙ₋₂, and a slope of a straight line connecting iₙ₋₁ and iₙ may be Sₙ₋₁.

In order to calculate a radius of curvature R of the folding vertex (P₀), a measurement section M, which is a section of the curve profile (l_{K}) to be measured, should be set. The measurement section M of the radius of curvature R means a portion of the curve profile (l_{K}) required to obtain the radius of curvature R. To this end, an operation of respectively obtaining a first point P1 and a second point P2 is performed.

Hereinafter, a method for setting a first point P1 and a second point P2 will be described. The first point P1 and the second point P2 are points in which a slope S between two adjacent points changes rapidly. Referring to a bottom graph of FIG. 6, the slope S between two adjacent points decreases relatively gently, then decreases sharply, and then decreases gently again. That is, it gradually decreases from a calculation start point (i₁) to a specific point iₖ, then rapidly decreases from iₖ to a specific point iₘ, and then gently decreases again from iₘ to a calculation end point (iₙ) . In this case, a point on the curve profile (l_{K}) corresponding to the specific point iₖ becomes a point P1 in which a measurement section of the radius of curvature R starts, and a point on the curve profile (l_{K}) corresponding to the specific point iₘ becomes a point P2 in which the measurement section of the radius of curvature R ends.

Setting of the first point P1 and the second point P2 in which the measurement section M of the radius of curvature R starts may be obtained by a point determination section (a). The point determination section (a) refers to a section arbitrarily determined to obtain the first point P1 and the second point P2. S values of the first point P1 and the second point P2 are specified according to the size of the point determination section (a). Referring to FIG. 6, S₁-a may be S_{K}, which is a S value of the first point P1, and Sₙ₋₁+a may be Sₘ, which is a S value of the second point P2. That is, S_{K} is a value, different from that of S₁, which is a slope of the straight line connecting i₁ and i₂, by the point determination section (a), and Sₘ is a value, different from that of Sₙ₋₁, which is a slope of the straight line connecting iₙ₋₁ and iₙ, by the point determination section (a).

After obtaining the S_{K} and Sₘ values, an i_{K} value and an iₘ value can be obtained using the bottom graph of FIG. 6. That is, when a function in the bottom graph of FIG. 6 is f(i), the values of i_{K} and iₘ may be obtained through f⁻¹ (S_{K})=i_{K} and f⁻¹ (Sₘ)=iₘ. in this case, k and m may be values other than a natural number.

A size of the point determination section (a) can be set arbitrarily. When the point determination section (a) is excessively small, it becomes impossible to select appropriate the values of i_{K} and iₘ to be the start and end points of the measurement section due to noise. On the other hand, when the size of the point determination section (a) is excessively large, the size of the measurement section is reduced, and thus a range of the curve profile (l_{K}) from which the radius of curvature R may be obtained is reduced. Therefore, the size of the point determination section (a) may be any value, but it should be specified at an appropriate size of 5 to 30% of a slope of the initial straight section.

After respectively obtaining coordinates of the first point P1 and the second point P2, a radius of curvature R near the folding vertex (P_{O}) is calculated using points of the curve profile (l_{K}) between the first point P1 and the second point P2. In this case, using a Gauss-Newton calculation method, an equation of a circuit approximating a portion corresponding to the measurement section M of the curve profile (l_{K}) may be obtained, and a radius of curvature R may be calculated by obtaining the radius of curvature.

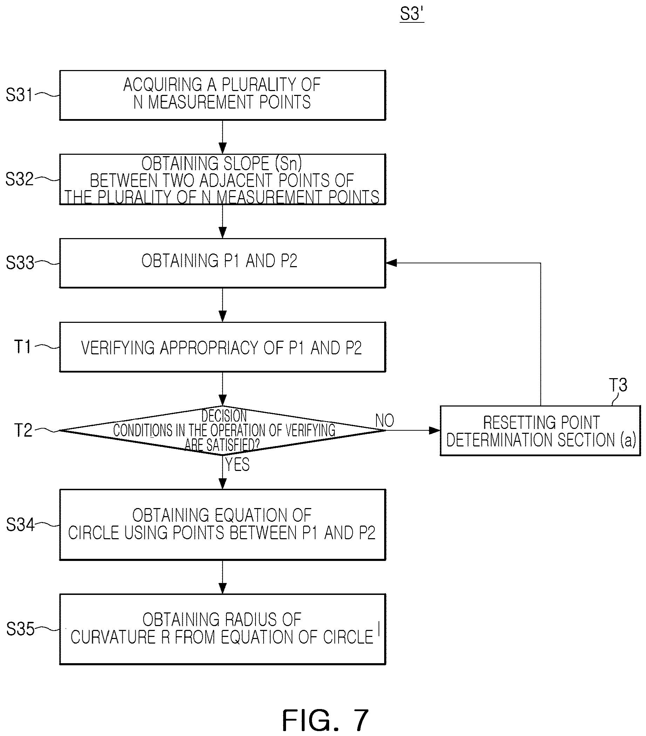

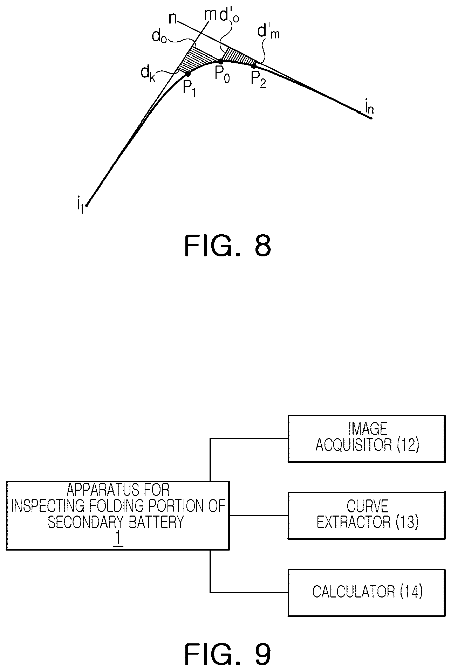

FIG. 7 is a flowchart further including an operation of verifying appropriacy in the calculation method of FIG. 5. FIG. 8 illustrates the curve profile of FIG. 6 and the straight lines m and n for calculating the operation of verifying appropriacy of FIG. 7.

The method for inspecting a folding portion of a pouch-type secondary battery according to an embodiment of the present disclosure may further include an operation (T1) of verifying appropriacy of the first point P1 and the second point P2. Hereinafter, with reference to FIGS. 7 and 8, the operation (T1) of verifying appropriacy and decision conditions thereof (T2) will be described.

The operation (T1) of verifying appropriacy includes obtaining a straight line m approximating a section from a calculation start point (i₁) of the curve profile (l_{K}) to the first point P1 and a straight line n approximating a section from the second point P2 to a calculation end point (iₙ) of the curve profile (l_{K}).

The decision conditions (T2) to pass the operation (T1) of verifying appropriacy should satisfy both conditions below. A straight line m approximating the section from the calculation start point (i₁) of the curve profile (l_{K}) to the first point P1 is obtained, and a straight line n approximating the section from the second point P2 to the calculation end point (in) of the curve profile (l_{K}) is obtained. First, a distance (dₖ) between the first point P1 and the straight line m should be smaller than distances between points between the first point P1 and the folding vertex (P₀) and the straight line m (d₀ in FIG. 8 is a distance between the folding vertex (P₀) and the straight line m) . Second, a distance d'm between the second point P2 and the straight line n should be smaller than distances between points between the folding vertex (P₀) and the second point P2 and the straight line n (d'₀ in FIG. 8 is a distance between the folding vertex (P₀) and the straight line n) . When both of the above-described conditions are satisfied, the decision conditions of the verification operation (T2) are satisfied.

When the decision conditions of the verification operation (T2) are satisfied, an operation (S34) of obtaining an equation of a circle through the points between the first point P1 and the second point P2 of the curve profile (l_{K}) is performed, and an operation (S35) of calculating a radius of curvature R is performed.

When the decision conditions of the verification operation (T2) are not satisfied, an operation (T3) of resetting a size of the point determination section (a) is further included. Referring to FIG. 7, an operation (S33) of resetting the size of the point determination section (a), and obtaining the first point P1 and the second point P2 is performed again.

FIG. 9 is a block diagram illustrating an apparatus for inspecting a folding portion of a pouch-type secondary battery 1 according to an embodiment of the present disclosure.

Hereinafter, with reference to FIG. 9, the apparatus for inspecting a folding portion of a pouch-type secondary battery 1 according to an embodiment of the present disclosure will be further described.

The apparatus for inspecting a folding portion of a pouch-type secondary battery 1 according to an embodiment of the present disclosure includes an image acquisitor 12, a curve extractor 13, and a calculator 14.

The image acquisitor 12 acquires an image of a target inspection portion 120A of the pouch-type secondary battery cell 10. The image acquisitor 12 may include an illuminator including a light source and a camera acquiring an image.

The curve extractor 13 extracts N curve profiles (l₁, l₂, ... l_{N}) including a folding portion 110 formed by being folded and a folding vertex 110A from an inside of the acquired inspection target portion 120A.

The calculator 14 calculates a radius of curvature R around the folding vertex 110A. The operation of calculating the radius of curvature R may include obtaining a plurality of n measurement points from respective curve profiles (l₁, l₂, ... l_{N}), obtaining a slope S between two adjacent points of the plurality of n measurement points, and respectively obtaining coordinates of a first point P1 in which a measurement section of the radius of curvature R starts and a second point P2 in which the measurement section of the radius of curvature R ends. The operation of obtaining the coordinates of the first point P1 and the second point P2 is the same as the method for inspecting a folding portion of a pouch-type secondary battery according to an embodiment of the present disclosure described above. A radius of curvature R may be calculated using points of a curve profile l_{K} between the first point P1 and the second point P2. That is, an equation of a circle approximating the curve profile l_{K} may be obtained using the points of the curve profile l_{K} between the first point P1 and the second point P2, and a radius of the equation of the circle may be calculated to obtain a radius of curvature R.

The calculator 14 may further include verifying appropriacy of the first point P1 and the second point P2. The operation of verifying appropriacy may verify whether decision conditions are satisfied. The decision conditions may be obtained using a straight line (m) approximating a section from a calculation start point (i₁) of the curve profile to the first point P1, and using a straight line (n) approximating a section from the second point P2 to a calculation end point (iₙ) of the curve profile. The operation of verifying appropriacy is the same as the method for inspecting a folding portion of a pouch-type secondary battery according to an embodiment of the present disclosure described above.

When the decision conditions of the verification operation are not satisfied, the first point P1 and the second point P2 may be reset. As described above, resetting of the first point P1 and the second point P2 may be performed by resetting a size of a point determination section (a).

The calculator 14 may include calculating an average value (R_{avg}) of the N radii of curvature or calculating a median value (R_{medi}) of the N radii of curvature.

The calculator 14 may include a comparison decision operation, which is an operation of comparing the average value (R_{avg}) of the N radii of curvature or the median value (R_{medi}) of the N radii of curvature with the reference value (Rₒ).

As set forth above, according to an embodiment of the present disclosure, after a folding process of a pouch-type secondary battery, through an algorithm of calculating a radius of curvature of a folding portion, whether a pouch-type secondary battery cell is defective may be easily determined.

According to an embodiment of the present disclosure, when manufacturing a pouch-type secondary battery cell, a folding process may be performed with an optimal radius of curvature, so that insulation breakdown or electrolyte leakage in the folding portion of the pouch-type secondary battery cell may be minimized.

While this disclosure includes specific examples, it will be apparent to one of ordinary skill in the art that various changes in form and details may be made in these examples without departing from the spirit and scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed to have a different order, and/or if components in a described system, architecture, device, or circuit are combined in a different manner, and/or replaced or supplemented by other components or their equivalents. Therefore, the scope of the disclosure is defined not by the detailed description, but by the claims and their equivalents, and all variations within the scope of the claims and their equivalents are to be construed as being included in the disclosure.

## Claims

1. As a method for inspecting a folding portion of a pouch-type secondary battery, formed by folding an outer portion of a secondary battery case, the method comprising:
acquiring an image of a target inspection portion, which is a portion of the folding portion in which measurement is performed;
extracting N curve profiles including a folding vertex of the folding portion from an inside of the target inspection portion; and
calculating a radius of curvature around the folding vertex from the N curve profiles.

2. The method for inspecting a folding portion of a pouch-type secondary battery of claim 1, wherein the operation of acquiring the image comprises setting the target inspection portion.

3. The method for inspecting a folding portion of a pouch-type secondary battery of claim 1, wherein the outer portion of the secondary battery case comprises a sealing portion formed by being sealed, and
the target inspection portion comprises at least one of both ends of the sealing portion.

4. The method for inspecting a folding portion of a pouch-type secondary battery of claim 3, wherein the sealing portion comprises
a first sealing portion formed in a longitudinal direction of the secondary battery case and including the folding portion; and
a second sealing portion formed in a direction intersecting the first sealing portion,
wherein the target inspection portion includes a portion in which the first sealing portion and the second sealing portion meet.

5. The method for inspecting a folding portion of a pouch-type secondary battery of claim 1, wherein the target inspection portion is 4.5 mm or more and less than 5.5 mm from an end of the secondary battery case in the longitudinal direction of the secondary battery case.

6. The method for inspecting a folding portion of a pouch-type secondary battery of claim 1, wherein the operation of calculating the radius of curvature comprises
acquiring a plurality of n measurement points, in respective curve profiles;
obtaining a slope between two adjacent points of the plurality of n measurement points; and
respectively obtaining coordinates of a first point P1 in which a measurement section of the radius of curvature starts and a second point P2 in which the measurement section of the radius of curvature ends.

7. The method for inspecting a folding portion of a pouch-type secondary battery of claim 6, wherein the first point P1 and the second point P2 are set by a size of a point determination section (a).

8. The method for inspecting a folding portion of a pouch-type secondary battery of claim 7, wherein the radius of curvature is calculated using points of the curve profiles between the first point P1 and the second point P2.

9. The method for inspecting a folding portion of a pouch-type secondary battery of claim 7, further comprising:
a verification operation of verifying appropriacy of the first point P1 and the second point P2.

10. The method for inspecting a folding portion of a pouch-type secondary battery of claim 9, wherein the verification operation verifies whether decision conditions are satisfied,
wherein the decision conditions are conditions using a straight line (m) approximating a section from a calculation start point (i₁) of the curve profile to the first point P1 and using a straight line (n) approximating a section from the second point P2 to a calculation end point (iₙ) of the curve profile.

11. The method for inspecting a folding portion of a pouch-type secondary battery of claim 10, further comprising:
an operation of resetting a size of the point determination section (a), when the decision conditions of the verification operation are not satisfied.

12. The method for inspecting a folding portion of a pouch-type secondary battery of claim 1, further comprising:
a comparison decision operation of comparing the sizes of the N radii of curvature with a reference value (Rₒ).

13. The method for inspecting a folding portion of a pouch-type secondary battery of claim 12, wherein the operation of calculating the radius of curvature comprises obtaining an average value (R_{avg}) of the N radii of curvature; and
the comparison decision operation includes comparing the average value (R_{avg}) of the radius of curvature with the reference value (Rₒ) .

14. The method for inspecting a folding portion of a pouch-type secondary battery of claim 12, wherein the operation of calculating the radius of curvature comprises obtaining a median value (R_{medi}) of the N radii of curvature; and
the comparison decision operation includes comparing the median value (R_{medi}) of the radius of curvature with the reference value (Rₒ) .

15. An apparatus for inspecting a folding portion of a pouch-type secondary battery, comprising:
an image acquisitor for acquiring an image of a target inspection portion of a pouch-type secondary battery cell;
a curve extractor for extracting N curve profiles including a folding portion, formed by folding an outer portion of the secondary battery cell and a folding vertex of the folding portion from an inside of the target inspection portion; and
a calculator for calculating a radius of curvature around the folding vertex.
